# EUROPEAN PATENT APPLICATION

(11) **EP 4 850 954 A1**
(43) Date of publication of application: **09.12.2026**
(21) Application number: 26176279.3
(22) Date of filing: 04.05.2026
(51) Int. Cl.: B60K 11/06, B60K 1/04, B60K 13/04, B60K 1/00, B60K 11/08

(54) **BATTERY COOLING STRUCTURE**

(30) Priority: 02.06.2025 JP 2025091691
(71) Applicant: MAZDA MOTOR CORPORATION, Hiroshima 730-8670 (JP)
(72) Inventor: Nozaki, Osamu, Hiroshima, 730-8670 (JP); Nakagawa, Hiromasa, Hiroshima, 730-8670 (JP); Nakayama, Shota, Hiroshima, 730-8670 (JP); Yoshida, Hiroshi, Hiroshima, 730-8670 (JP)
(74) Representative: Lorenz Seidler Gossel Part. mbB

(57) **Abstract**

To provide a battery cooling structure capable of favorably cooling a battery the invention provides an exhaust pipe (80) disposed below a floor panel (10) and guiding exhaust gas discharged from an engine E to outside of a vehicle, a battery (6) having: a battery body (30) disposed above the floor panel (10) and including a battery cell (31); and a battery case (20) accommodating the battery body (30) therein, and a fan (50) disposed above the floor panel (10) to draw cooling air for cooling the battery body (30) into the battery case (20). The fan (50) is disposed between the battery body (30) and the floor panel (10).

## Description

The present invention relates to a battery cooling structure.

In a vehicle on which a battery is mounted, a vehicle with an apparatus for cooling the battery is known.

For example, in Japanese Patent No. 7,258,067, a vehicle is disclosed that includes a cooling apparatus including a battery body (an electrical storage device), a case that accommodates the battery body, an intake duct and an exhaust duct, each of which is connected to the case, and a fan (blower fan). In this cooling apparatus, when the fan is rotationally driven, cooling air is suctioned into the case through the intake duct. The battery body is cooled by the cooling air described above, and the cooling air that has cooled the battery body is discharged to the outside of the case via the exhaust duct.

This cooling apparatus is configured that the case is placed on an upper surface of the floor panel, that the intake duct extends forward from a front surface of the case, and that the exhaust duct extends forward from a side surface on one side of the case in a vehicle width direction.

In a vehicle on which an engine is mounted, there is a case where an exhaust pipe, through which high-temperature exhaust gas discharged from the engine flows, is disposed below the floor panel. In such a vehicle, in the case where the case, which accommodates the battery body as in the cooling apparatus of Japanese Patent No. 7,258,067, is placed on the upper surface of the floor panel, radiant heat from the exhaust pipe is transferred to the battery body via the floor panel. Consequently, there is a possibility that cooling performance of the cooling apparatus (performance of the cooling apparatus to cool the battery body) is not sufficiently exerted, that is, the battery body is not sufficiently cooled.

The invention has been made in view of a circumstance as described above and therefore has an object of providing a battery cooling structure capable of reliably cooling a battery body.

In order to solve the above problem, a battery cooling structure according to the invention is a battery cooling structure applied to a vehicle on which an engine is mounted, and includes: a floor panel that constitutes a floor surface of the vehicle; an exhaust pipe that is disposed below the floor panel and guides exhaust gas discharged from the engine to outside of the vehicle; a battery that has: a battery body disposed above the floor panel and including a battery cell; and a battery case accommodating the battery body therein; and a fan for drawing cooling air for cooling the battery body into the battery case. The fan is disposed between the battery body and the floor panel (claim 1).

In the invention, the fan is disposed between the floor panel and the battery case that are disposed above the exhaust pipe. Accordingly, radiant heat that is released from the exhaust pipe toward the battery body can be blocked by the floor panel, the fan, and the cooling air that flows through the fan. Therefore, it is possible to prevent a temperature of the battery body from becoming high due to the radiant heat from the exhaust pipe, and it is possible to exert favorable cooling performance for the battery body by the cooling air. That is, the battery body can reliably be cooled.

In the above configuration, preferably, the fan is provided at a position that overlaps the battery body in a plan view.

According to this configuration, it is possible to further reliably block the radiant heat, which is released from the exhaust pipe toward the battery body, by the fan and the cooling air flowing through the fan. Thus, it is possible to further reliably exert the favorable cooling performance for the battery body by the cooling air.

In the above configuration, preferably, the fan is provided at a position that overlaps the exhaust pipe in a plan view.

According to this configuration, it is possible to further reliably block the radiant heat, which is released from the exhaust pipe toward the battery body, by the fan and the cooling air flowing through the fan. Thus, it is possible to further reliably exert the favorable cooling performance for the battery body by the cooling air.

In the above configuration, preferably, the fan is supported on a bottom portion of the battery case while protruding downward from the bottom portion.

According to this configuration, it is possible to suppress temperature increases of the battery case and thus the battery body accommodated in the battery case, which is caused by the radiant heat from the exhaust pipe. Therefore, it is possible to further reliably exert the favorable cooling performance for the battery body by the cooling air.

In the above configuration, preferably, a portion of the floor panel that opposes the fan has a downwardly recessed shape.

According to this configuration, it is possible to arrange the fan at a position that protrudes downward from the bottom portion of the battery case and can block the radiant heat without increasing height positions of the battery case and thus the battery.

In the above configuration, preferably, the fan has: a fan body that includes plural blades; and a fan case that accommodates the fan body therein, and the fan case is made of resin.

According to this configuration, it is possible to suppress a temperature increase of the fan case and to suppress the temperature increase of the battery by reducing an amount of heat transferred from the fan case to the battery.

In the above configuration, preferably, the fan has a discharge port for discharging the cooling air and includes a cooling air lead-out duct into which the cooling air discharged from the discharge port is introduced, and a separation distance between the cooling air lead-out duct and the battery case in a plan view is longer toward a downstream side in a flow direction of the cooling air.

According to this configuration, it is possible to lead out the relatively high-temperature cooling air that has cooled the battery body in a direction away from the battery case. Therefore, it is possible to prevent the temperature increase of the battery case by the high-temperature cooling air.

In the above configuration, preferably, the fan has a discharge port for discharging the cooling air and includes a cooling air lead-out duct into which the cooling air discharged from the discharge port is introduced, and, in a flow direction of the cooling air, an end portion on a downstream side of the cooling air is opened in a direction along the floor panel.

According to this configuration, it is possible to cool the floor panel by the cooling air, which is lead out from the cooling air lead-out duct, by moving the cooling air along the floor panel. Therefore, it is possible to suppress the temperature increase of the battery due to heat reception from the floor panel.

In the above configuration, preferably, the fan has a discharge port for discharging the cooling air that has cooled the battery body to outside of the battery case and includes a cooling air lead-out duct into which the cooling air discharged from the discharge port is introduced, the battery, the fan, and the cooling air lead-out duct are accommodated in an accommodation portion that is defined by the floor panel and a luggage board disposed above the floor panel, and an end portion on a downstream side of the cooling air lead-out duct is opened to inside of the accommodation portion.

According to this configuration, the battery, the fan, and the duct can be accommodated in the accommodation portion. In addition, air in the accommodation portion can be agitated by the cooling air that is led out from the cooling air lead-out duct, whereby a temperature increase of the floor panel that defines the accommodation portion can be suppressed. Therefore, it is possible to suppress the temperature increase of the battery due to the heat reception from the floor panel.

In the above configuration, preferably, the cooling air lead-out duct has such a shape that a downstream side is located higher than an upstream side in a flow direction of the cooling air.

According to this configuration, it is possible to prevent a liquid accumulated at a bottom of the accommodation portion from entering the cooling air lead-out duct while opening an opening end on a downstream side of the cooling air lead-out duct to inside of the accommodation portion.

In the above configuration, preferably, a silencer that is provided to the exhaust pipe is provided, and the battery is disposed at a position that does not overlap the silencer in a plan view.

According to this configuration, it is possible to reduce a heat reception amount from the silencer to the battery and to further reliably lower the temperature of the battery.

In the above configuration, preferably, the exhaust pipe includes: a first pipe portion that extends along a bottom portion of the battery case; and a second pipe portion that connects an end portion on a downstream side of the first pipe portion and the silencer, the silencer is located above the first pipe portion, and the second pipe portion has a shape that is inclined obliquely upward from the end portion on the downstream side of the first pipe portion toward the silencer.

According to this configuration, it is possible to suppress an amount of heat transferred from the exhaust pipe to the battery to be small by arranging the silencer at a relatively upper position.

In the above configuration, preferably, a catalytic device that is provided to the exhaust pipe is provided, and the battery is disposed at a position that does not overlap the catalytic device in the plan view.

According to this configuration, it is possible to reduce an amount of heat transferred from the catalytic device to the battery.

As it has been described so far, according to the battery cooling structure in the invention, it is possible to reliably lower the temperature of the battery body.
FIG. 1 is a schematic plan view illustrating a part of a vehicle, to which a battery cooling structure according to an embodiment of the invention is applied.
FIG. 2 is a schematic perspective view illustrating a part of a vehicle rear portion.
FIG. 3 is a schematic plan view illustrating a part of the vehicle rear portion.
FIG. 4 is a schematic bottom view illustrating a part of the vehicle rear portion.
FIG. 5 is a schematic cross-sectional view that is taken along line V-V in FIG. 3.
FIG. 6 is a schematic cross-sectional view in which a tray is omitted from FIG. 5.
FIG. 7 is a schematic rear view of a battery unit.
FIG. 8 is a schematic bottom view of the battery unit.
FIG. 9 is a schematic perspective view for illustrating an internal structure of a battery.
FIG. 10 is a schematic perspective view in which a distribution portion is omitted from FIG. 9.
FIG. 11 is a schematic cross-sectional view of the battery unit that is taken along line XI-XI in FIG. 7.

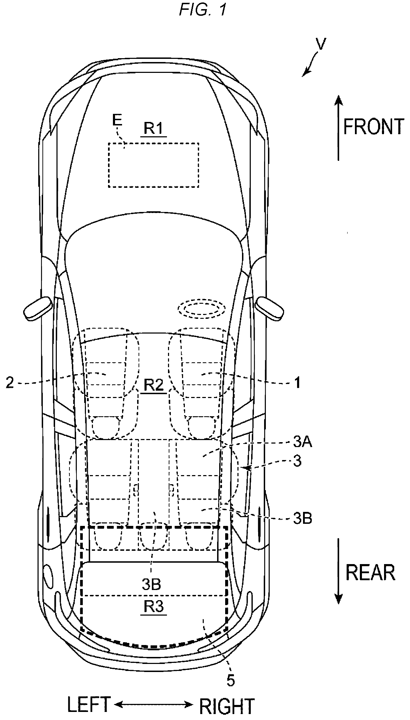

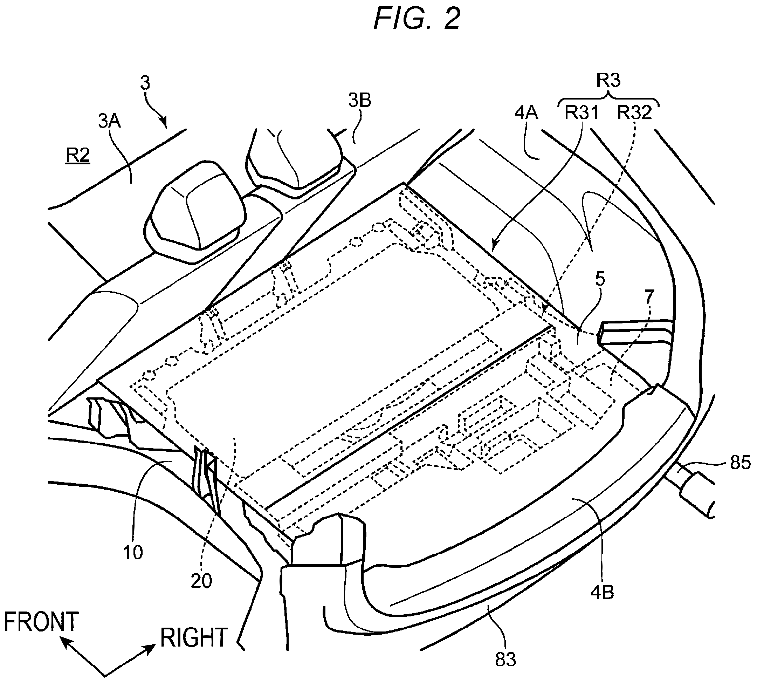

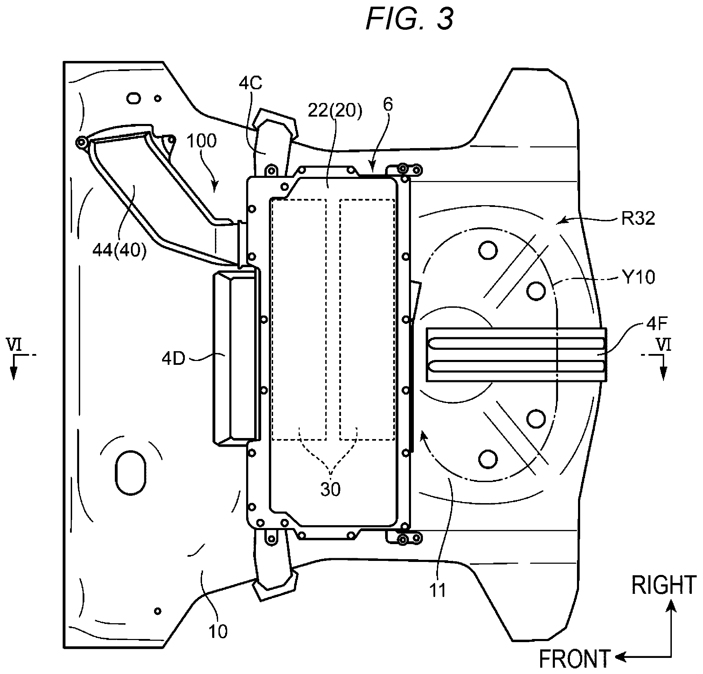

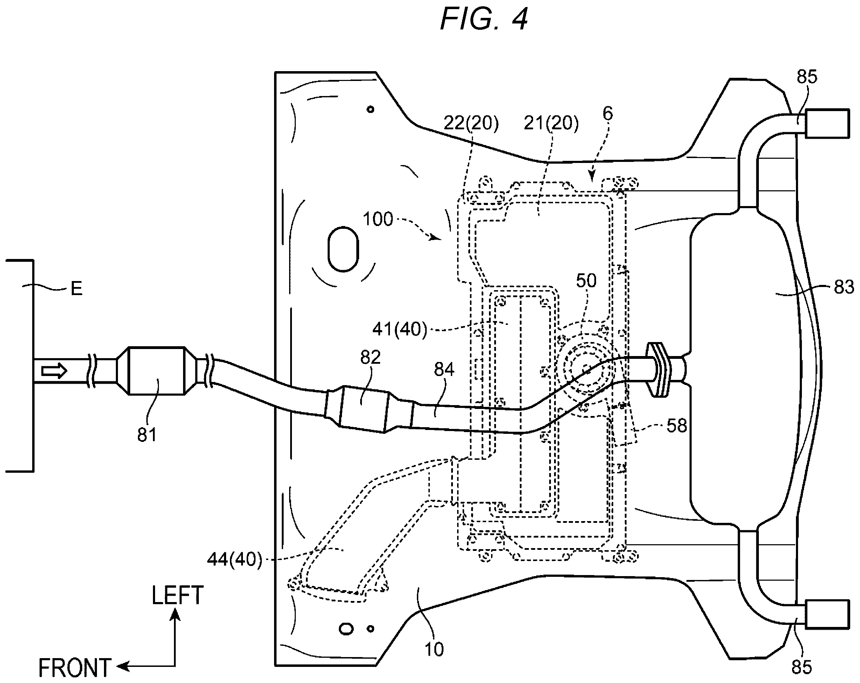

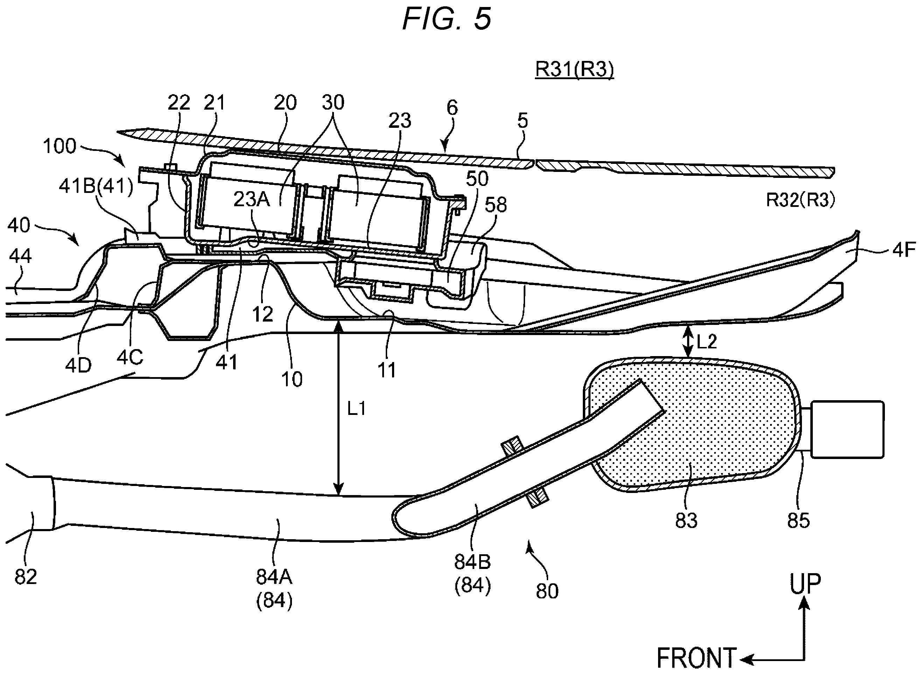

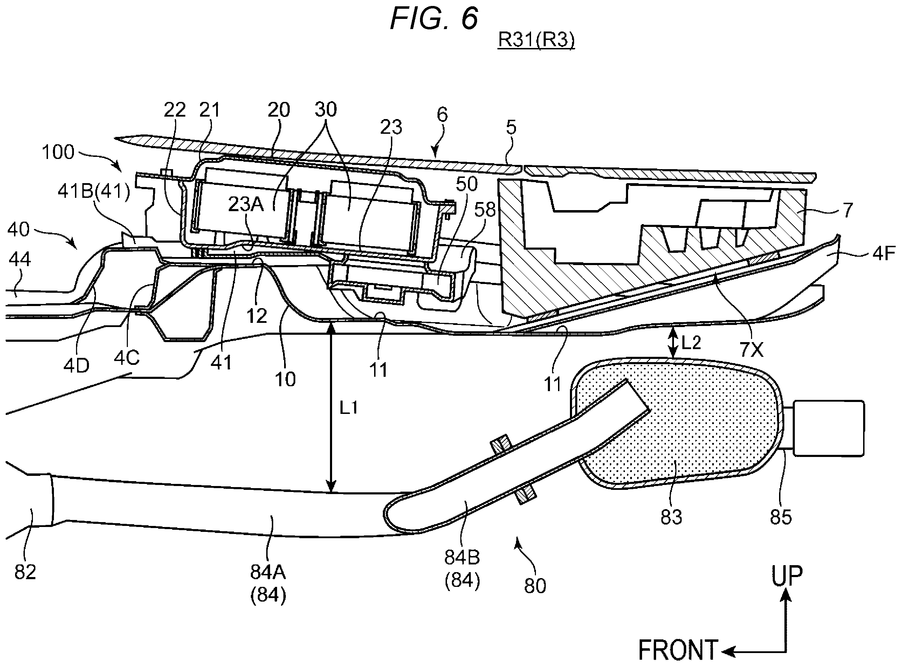

FIG. 1 is a schematic plan view of a vehicle V, to which a battery cooling structure according to an embodiment of the invention is applied. Hereinafter, as appropriate, a front-rear direction of the vehicle V (a vehicle front-rear direction) is simply referred to as a front-rear direction, and travel directions of the vehicle V during forward travel and on an opposite side are referred to as a front direction and a rear direction, respectively. In addition, a direction that is orthogonal to this front-rear direction in a plan view is referred to as a right-left direction, and a right side in a state of facing the front and an opposite side are referred to as the right and the left, respectively. Furthermore, a direction that is orthogonal to the front-rear direction and the right-left direction is referred to as an up-down direction, and a ground side of the vehicle V and an opposite side are referred to as a lower side and an upper side, respectively. The directions indicated in the drawings are directions that are defined as described above. FIG. 2 is a schematic perspective view illustrating a part of a rear portion of the vehicle V. FIG. 3 is a schematic plan view illustrating a part of the rear portion of the vehicle V. In FIG. 3, a tray 7, which will be described below, is omitted. FIG. 4 is a schematic bottom view that corresponds to FIG. 3. FIG. 5 is a schematic cross-sectional view illustrating a part of a cross section that is taken along line V-V of FIG. 3 in the vehicle rear portion. FIG. 6 is a view in which the tray 7, which will be described below, is omitted from FIG. 5.

An engine room R1 on which an engine E is mounted is defined in a front portion of the vehicle V. In the present embodiment, the vehicle V is a hybrid vehicle, and a motor (not illustrated) is mounted as a drive source of the vehicle V in addition to the engine E.

A cabin R2 which a person gets in is defined behind the engine room R1. A luggage room R3 for loading luggage is defined in the rear portion of the vehicle V and behind the cabin R2. The vehicle V is provided with a floor panel 10 that constitutes floor surfaces of the cabin R2 and the luggage room R3. That is, the cabin R2 and the luggage room R3 are defined above the floor panel 10.

The vehicle V is a vehicle having two rows of seats, a driver's seat 1 and a passenger seat 2 are provided in a front portion of the cabin R2, and a second-row seat 3 is provided in a rear portion of the cabin R2. The second-row seat 3 is a so-called bench seat for three persons, and includes a seat cushion 3A constituting a seat surface and a seat back 3B extending upward from a rear end portion of the seat cushion 3A. The second-row seat 3 is supported by a seat support section 4D, which is provided to a front surface of a cross member 4C extending in a vehicle width direction, via a bracket 4X.

The luggage room R3 is defined behind the seat back 3B of the second-row seat 3. In the present embodiment, a partition wall that separates the cabin R2 and the luggage room R3 is not provided, and a space of the cabin R2 and a space of the luggage room R3 are connected to each other.

The luggage room R3 is partitioned in the up-down direction by a plate-shaped luggage board 5, and includes a first luggage room R31 located above the luggage board 5 and a second luggage room R32 located below the luggage board 5. As illustrated in FIG. 2, the luggage board 5 has a plate shape that extends between a pair of right and left wheelhouses 4A in the right-left direction (only the right wheelhouse is illustrated in FIG. 2). The luggage board 5 also has a plate shape that extends between the seat back 3B of the second-row seat 3 and a back panel 4B constituting a rear end portion of the vehicle V in the front-rear direction. The second luggage room R32 is a substantially closed space that is defined by the floor panel 10, the luggage board 5, the wheel house 4A, the seat back 3B, and the back panel. The second luggage room R32 corresponds to the "accommodation portion" in the invention.

The luggage board 5 is supported by the floor panel 10 in an openable/closable state. When the luggage board 5 is opened, a user can access the second luggage room R32. In the present embodiment, a hinge is provided substantially at a center of the luggage board 5 in the front-rear direction, and the user can open/close the luggage board 5 while bending it with the hinge.

A recessed portion 11 that is recessed downward is provided to a portion of the floor panel 10 that constitutes a floor surface of the second luggage room R32. More specifically, the floor surface of the second luggage room R32 is recessed toward a center from a front end portion, a right end portion, and a left end portion thereof, and a portion excluding the front end portion, the right end portion, and the left end portion forms the recessed portion 11. In the vehicle V of the present embodiment, as will be described below, a part of a fan 50 is accommodated in this recessed portion 11. However, this recessed portion 11 can also function as a spare tire pan for accommodating a spare tire. That is, the floor panel 10 in the present embodiment is configured to be usable as a floor panel of another type of a vehicle on which the battery 6 and the fan 50 are not mounted but the spare tire is mounted.

A battery 6 is accommodated in the second luggage room R32. The battery 6 supplies electric power to a motor or the like as a drive source of the vehicle V. The battery 6 is accommodated in a front portion of the second luggage room R32. An outer shape of the battery 6 is a substantially rectangular parallelepiped shape that extends in the right-left direction. In a plan view, the battery 6 occupies a substantially entire space on the front side of the second luggage room R32 when it is divided into two equal parts in the front-rear direction. More specifically, an outer dimension of the battery 6 in the right-left direction is approximately equal to a dimension of the second luggage room R32 in the right-left direction, and an outer dimension of the battery 6 in the front-rear direction is approximately half of a dimension of the second luggage room R32 in the front-rear direction.

In the present embodiment, the tray 7 is accommodated in a rear portion of the second luggage room R32. The tray 7 is provided to accommodate a repair tool and the like. Plural accommodation spaces, each of which is recessed downward, are defined in the tray 7. For example, the tray 7 is made of polystyrene foam. The tray 7 occupies a substantially entire space on the rear side of the second luggage room R32 when it is divided into the two equal parts in the front-rear direction.

In the present embodiment, a protruding member 4F that protrudes upward from the floor panel 10 is provided behind the battery 6. The protruding member 4F is provided near a right-left center of the floor panel 10. The protruding member 4F has a shape that extends in the front-rear direction and has a larger height dimension toward the rear. The protruding member 4F is a member for suppressing deformation of the floor panel 10 and the like during a rear collision of the vehicle V. A part of the tray 7 is disposed above the protruding member 4F. As illustrated in FIG. 6, the tray 7 is supported by the protruding member 4F and the floor panel 10 in a state where a gap 7X is defined therebetween.

An exhaust pipe 80 that guides exhaust gas discharged from the engine E to the outside of the vehicle is disposed below the floor panel 10. The exhaust pipe 80 has a shape that extends in the front-rear direction, and extends from the engine E to the rear end portion of the vehicle V. In the right-left direction, the exhaust pipe 80 generally runs near the center of the vehicle V and the floor panel 10.

A catalytic device 81 that includes a catalyst and purifies the exhaust gas by action of the catalyst is provided in an intermediate portion of the exhaust pipe 80. A pre-silencer 82 and a main silencer 83 for reducing exhaust noise are provided on a downstream side of catalytic device 81 in the exhaust pipe 80 in a flow direction of the exhaust gas, that is, on the rear side in the front-rear direction. The pre-silencer 82 is a silencer that is smaller than the main silencer 83. The pre-silencer 82 is arranged in front of the main silencer 83. These two silencers 82, 83 are spaced apart from each other in the front-rear direction, and the two silencers 82, 83 are connected to each other by a pipe that has a smaller diameter than those of the silencers 82, 83. Hereinafter, a portion of the above-described pipe that connects the two silencers 82, 83 of the exhaust pipe 80 is referred to as a connection pipe 84 as appropriate. In the present embodiment, the pre-silencer 82 and the main silencer 83 each correspond to the "silencer" in the invention.

The main silencer 83 is provided in the rear end portion of the vehicle V. The main silencer 83 is arranged at a position where a center thereof in the right-left direction substantially coincides with the center of the floor panel 10. The main silencer 83 has a shape that extends in the right-left direction. The exhaust pipe 80 is divided into two in the main silencer 83, and muffler pipes 85, 85 that constitute a rear end portion (a downstream end portion in the flow direction of the exhaust gas) of the exhaust pipe 80 extend rearward from right and left ends of the main silencer 83, respectively. Rear ends of the muffler pipes 85, 85 are opened to the atmosphere.

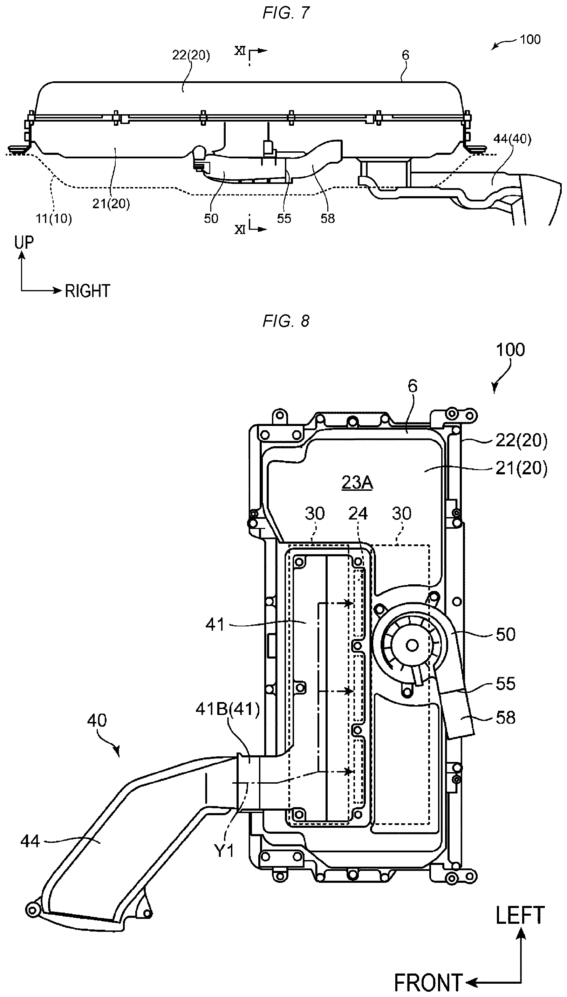

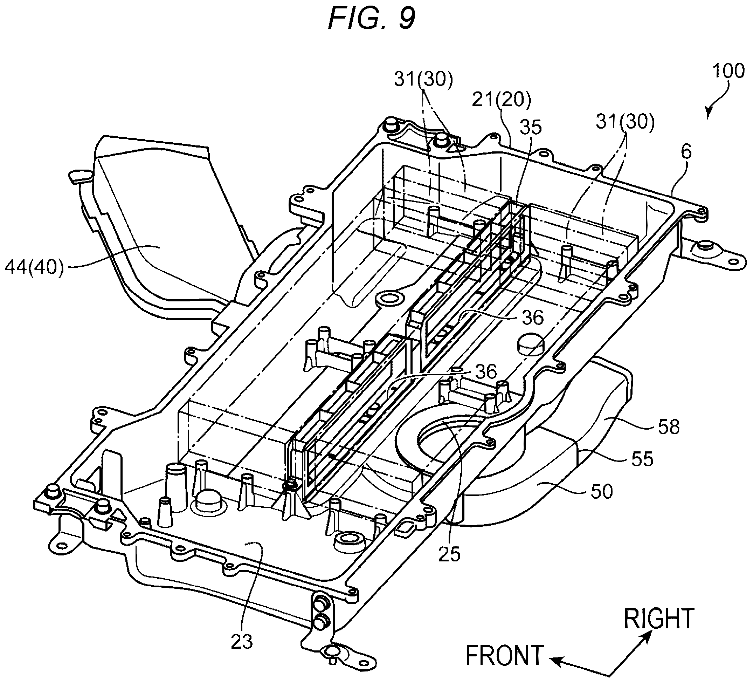

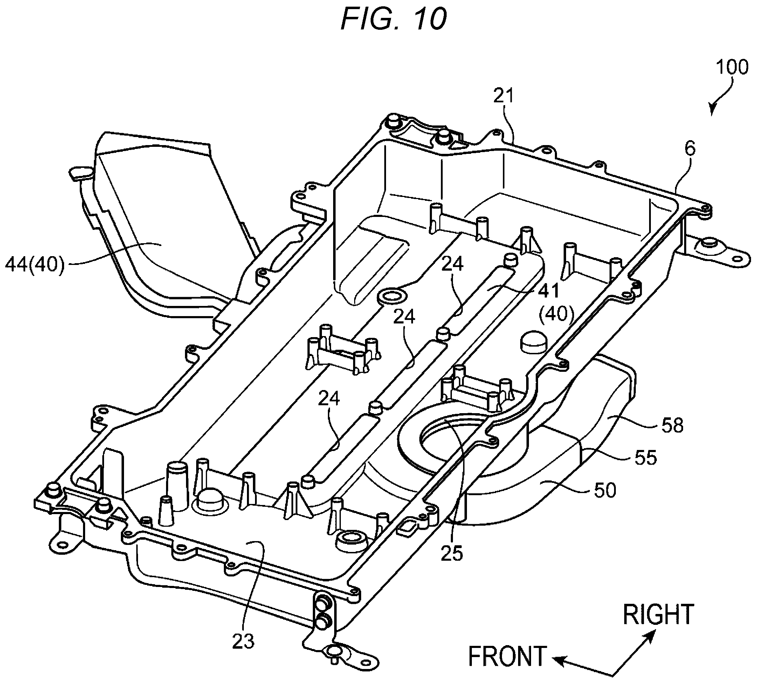

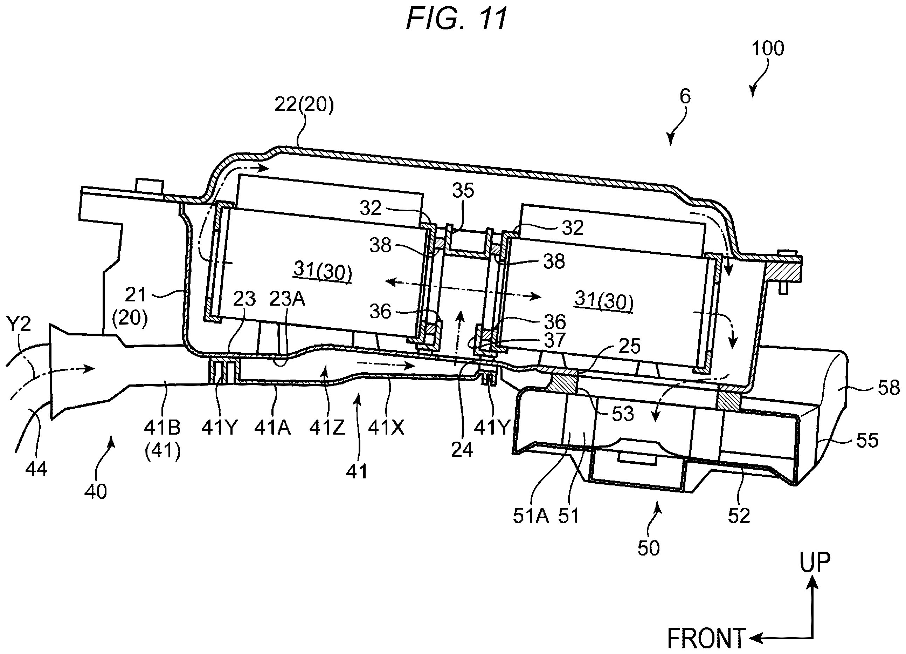

FIG. 7 is a schematic rear view illustrating a battery unit 100 that includes the battery 6 and a cooling apparatus for cooling it. FIG. 8 is a bottom view of the battery unit 100. FIG. 9 is a schematic perspective view for illustrating an internal structure of the battery 6. FIG. 10 is a schematic perspective view of the battery unit 100 in a state where a distribution portion 35 described below is omitted from FIG. 9. FIG. 11 is a schematic cross-sectional view of the battery unit 100 that is taken along line XI-XI in FIG. 7.

The battery 6 has two battery modules 30, 30, each of which includes battery cells 31, and a battery case 20 that accommodates the two battery modules 30, 30. In the present embodiment, the battery case 20 is made of aluminum. The battery module 30 corresponds to the "battery body" in the invention.

The battery case 20 has: a box-shaped case body portion 21 that is opened upward; and a lid portion 22 that covers the case body portion 21 from above. The battery case 20 defines the outer shape of the battery 6 and has a substantially rectangular parallelepiped shape that extends in the right-left direction.

The two battery modules 30, 30 have the mutually same structure. These battery modules 30, 30 are juxtaposed with a gap being provided therebetween in the front-rear direction. Each of the battery modules 30 includes the plural battery cells 31 that are arranged in a row in the right-left direction, and an outer shape thereof is a substantially rectangular parallelepiped shape that extends in the right-left direction. Although not illustrated in detail, in the single battery module 30, each adjacent pair of the battery cells 31 is arranged with a gap being provided therebetween in the right-left direction, and a passage is defined between each adjacent pair of the battery cells 31. For example, the battery cell 31 is a lithium-ion battery. In the present embodiment, as described above, the battery modules 30, 30 are juxtaposed in the front-rear direction, the front-rear direction corresponds to the "first direction" in the invention, and the right-left direction corresponds to the "second direction".

The two battery modules 30, 30 are each supported by a battery support portion 32. The battery support portion 32 surrounds the battery module 30 in a state where the passages between the battery cells 31 are exposed to the front and the rear.

A dimension of each of the battery modules 30 in the right-left direction is larger than half of a dimension of the battery case 20 in the right-left direction, and the battery modules 30 are accommodated in the battery case 20 in a state of extending from a center thereof in the right-left direction to the right and the left, respectively. In detail, the dimension of each of the battery modules 30 in the right-left direction is set to approximately 3/4 of the dimension of the battery case 20 in the right-left direction. In the right-left direction, each of the battery modules 30 occupies a region from the vicinity of a left end of the battery case 20 to the vicinity of a center between a center position and a right end position of the battery case 20. Although not illustrated, a Battery Control Module (BCM) and the like are accommodated in a region on the left side of the battery modules 30, 30 in an internal space of the battery case 20, the BCM executing charge/discharge control of the battery modules 30, 30, and the like.

A dimension of each of the battery modules 30 in the front-rear direction is slightly smaller than half of a dimension of the battery case 20 in the front-rear direction. In the front-rear direction, the front battery module 30 occupies a region from the vicinity of a front end of the battery case 20 to a position on the front side of a center thereof in the front-rear direction, and the rear battery module 30 occupies a region from the vicinity of a rear end of the battery case 20 to a position on the rear side of the center thereof in the front-rear direction.

A bottom wall 23, which is a wall member constituting a bottom portion, that is, a lower end portion of the battery case 20, in the case body portion 21 is formed with an introduction hole 24 that penetrates it in the up-down direction, that is, penetrates a lower surface 23A and an upper surface of the bottom wall 23. The introduction hole 24 is an opening for introducing cooling air into the battery case 20. In the present embodiment, the bottom wall 23 is formed with the three introduction holes 24 that are aligned in the right-left direction. Each of the introduction holes 24 is an elongated hole that extends in the right-left direction. These introduction holes 24 are each formed at an intermediate position of the two battery modules 30 on the bottom wall 23, that is, a position between the two battery modules 30 on the bottom wall 23 in a plan view. In the right-left direction, the three introduction holes 24 are formed in substantially the same region as the region that is occupied by the battery modules 30. Hereinafter, the bottom wall 23 of the battery case 20 and the case body portion 21 is referred to as a case bottom wall 23 as appropriate.

The case bottom wall 23 is further formed with a lead-out hole 25, which penetrates it in the up-down direction, in a rear portion thereof. The lead-out hole 25 is an opening for leading out the cooling air from the battery case 20. The lead-out hole 25 is a substantially circular hole. The lead-out hole 25 is formed at a position that is a center of the case bottom wall 23 in the right-left direction and is separated rearward from the introduction hole 24, and at a position opposing the rear battery module 30.

The distribution portion 35 for distributing the cooling air, which has been introduced into the battery case 20 through the introduction hole 24, to the front and the rear is accommodated inside the battery case 20. The distribution portion 35 is disposed at a position opposing the introduction hole 24. The distribution portion 35 has a substantially rectangular parallelepiped shape that extends in the right-left direction along the battery module 30. A front wall and a rear wall of the distribution portion 35 are formed with first openings 36, 36 that are opened to the front and the rear, respectively. An internal space of the distribution portion 35 communicates with the passage between the battery cells 31 of the front battery module 30 via the front first opening 36, and communicates with the passage between the battery cells 31 of the rear battery module 30 via the rear first opening 36. On a bottom wall of the distribution portion 35, a second opening 37 that is opened downward is formed at a position opposing each of the introduction holes 24.

With the above configuration, as indicated by arrows Y2 in FIG. 11, the cooling air that has passed through the introduction hole 24 flows into the distribution portion 35 through the second opening 37, a part of the cooling air is introduced into the passage between the battery cells 31 of the front battery module 30 through the front first opening 36, and the remaining cooling air is introduced into the passage between the battery cells 31 of the rear battery module 30 through the rear first opening 36. In addition, the cooling air flows through the passages between the battery cells 31 while cooling them, and is led out to the outside of the battery module 30. More specifically, the cooling air that has been introduced into the passage of the front battery module 30 is led out to the outside of the battery module 30 from an opening that is formed in a front surface of the battery support portion 32 for supporting the front battery module 30. Meanwhile, the cooling air that has been introduced into the passage of the rear battery module 30 is led out to the outside of the battery module 30 from an opening that is formed in a rear surface of the battery support portion 32 for supporting the rear battery module 30. The cooling air that has been led out to the outside of the battery module 30 flows through a gap between the battery module 30 and an inner surface of the battery case 20, is directed toward the lead-out hole 25, and is led out from the lead-out hole 25 to the outside of the battery case 20.

Here, a gap between the distribution portion 35 and the battery support portion 32 is closed by an elastic member 38, and the cooling air in the distribution portion 35 is almost entirely introduced into the passage between the battery cells 31. A gap between the bottom wall of the distribution portion 35 and a portion of the case bottom wall 23 surrounding the three introduction holes 24 is also closed by an elastic member, and the cooling air that has flowed into the battery case 20 through the introduction holes 24 is almost entirely introduced into the distribution portion 35.

The battery unit 100 has a cooling duct 40 for introducing the cooling air into the battery case 20. In the present embodiment, the cooling duct 40 is made of resin. The cooling duct 40 includes an under duct 41 and a front duct 44 that constitutes a portion on an upstream side of the under duct 41 in the flow direction of the cooling air. The cooling air that has passed through the front duct 44 is introduced into the under duct 41.

As illustrated in FIG. 8, the under duct 41 has a substantially rectangular shape that extends in the right-left direction. In a plan view, the front battery module 30 substantially entirely overlaps the under duct 41. More specifically, in the right-left direction, the under duct 41 extends from substantially the same position as a right end of the battery module 30 to substantially the same position as a left end of the battery module 30. In the front-rear direction, the under duct 41 extends from the same position as a front end of the front battery module 30 to a position behind this.

As illustrated in FIG. 11, the under duct 41 is connected to the case bottom wall 23 in a manner to define a passage 41Z with the case bottom wall 23. More specifically, the under duct 41 has a plate-shaped under duct bottom wall 41A and a raised portion 41Y that is raised upward from an outer peripheral edge of the under duct bottom wall 41A. The under duct bottom wall 41A extends substantially horizontally below and along the case bottom wall 23. The under duct 41 is fixed to the case bottom wall 23 in a state where an upper surface of the raised portion 41Y is in contact with a lower surface of the case bottom wall 23.

A rear end portion of the under duct bottom wall 41A opposes each of the introduction holes 24, and the passage 41Z between it and the case bottom wall 23 communicates with the distribution portion 35 and the internal space of the battery case 20 via the three introduction holes 24. Hereinafter, a passage that is the passage 41Z and is defined by the under duct 41 and the case bottom wall 23 is referred to as the under duct passage 41Z as appropriate.

A duct connection portion 41B that constitutes a front end portion of the under duct 41 and is connected to the front duct 44 extends forward from a right end portion of a front surface of the under duct bottom wall 41A. The duct connection portion 41B has a substantially rectangular parallelepiped tubular shape that extends in the front-rear direction, and an opening in a rear end portion thereof communicates with the under duct passage 41Z.

The front duct 44 extends forward from a front end of the duct connection portion 41B. As illustrated in FIG. 3, the front duct 44 extends obliquely forward to the right from the duct connection portion 41B. Although not illustrated, plural opening holes are formed in a front end portion of the front duct 44. Here, the front end portion of the front duct 44 is located below the seat back 3B of the second-row seat 3, and, below the seat back 3B, the opening holes are opened to the right. This front duct 44 corresponds to the "cooling air introduction duct" in the invention.

In the cooling duct 40 configured as described above, the cooling air (air) in the cabin R2 is introduced from a front end of the front duct 44 to the inside thereof, and is then introduced into the under duct passage 41Z as indicated by the arrows Y2 in FIG. 11. In addition, as indicated by arrows Y1 in FIG. 8, in the under duct passage 41Z, the cooling air is distributed to each of the introduction holes 24. Then, as indicated by the arrows Y2 in FIG. 11, the cooling air is introduced into the distribution portion 35 through each of the introduction holes 24, cools the battery cells 31 as described above, and is guided to the lead-out hole 25.

### (Fan)

The battery unit 100 has the fan 50 for drawing the cooling air into the battery case 20. The fan 50 has: a fan body 51 that has plural blades 51A and rotates about a predetermined shaft; and a fan case 52 that accommodates the fan body 51. In the present embodiment, the fan 50 is a sirocco fan and has the plural blades 51A that are arranged along a cylindrical surface. The fan case 52 has a spiral shape that surrounds an outer periphery of the fan body 51. In the present embodiment, the fan case 52 is made of the resin.

The fan 50 is arranged at a position above the floor panel 10 and separated from the floor panel 10. In a state where an upper wall of the fan case 52, that is, a wall member constituting an upper end portion thereof and the case bottom wall 23 are in contact with each other, the fan 50 is supported by the case bottom wall 23 while protruding downward from the case bottom wall 23. In addition, the fan 50 is supported by the case bottom wall 23 in a state where the rotation shaft of the fan body 51 extends in the up-down direction. Here, a gap in the up-down direction between the upper wall of the fan case 52 and the fan body 51 is very small, and the fan body 51 is arranged immediately below the case bottom wall 23.

As described above, the fan 50 is arranged below the case bottom wall 23, and the fan 50 and the case bottom wall 23 overlap each other in the plan view. The fan 50 is arranged behind the under duct 41. Accordingly, the fan 50 is located between the floor panel 10 and a portion of the case bottom wall 23 that is a rear portion of the case bottom wall 23 and does not overlap the under duct 41 in the plan view.

Substantially at a center of the upper wall of the fan case 52, a suction port 53 that penetrates this in the up-down direction and suctions the cooling air thereinto is formed. The suction port 53 is a substantially round hole, and a center axis thereof is the same as a rotation center axis of the fan body 51. The suction port 53 and the lead-out hole 25 are located at positions that overlap each other in the plan view, and an internal space of the fan case 52 and the internal space of the battery case 20 communicate with each other via the lead-out hole 25. When the fan body 51 is rotationally driven, the air in the battery case 20 is suctioned (drawn) into the fan case 52. In this way, the flow of the cooling air described above, that is, such airflow is generated that the air in the cabin R2 is introduced into the cooling duct 40, is then introduced into the battery case 20, and is thereafter led out to the outside of the battery case 20 through the lead-out hole 25. In the present embodiment, an inner diameter of the suction port 53 of the fan 50 and an inner diameter of the lead-out hole 25 of the battery case 20 are substantially the same, and these substantially coincide with each other in the plan view.

The fan 50 is disposed at a position that is the center of the case bottom wall 23 in the right-left direction and opposes the rear battery module 30, that is, at a position that overlaps the rear battery module 30 in the plan view.

More specifically, as illustrated in FIG. 7, outer shapes of the fan 50 and the fan case 52 have a substantially cylindrical shape, a center axis of which extends in the up-down direction, and an outer diameter of which has a dimension of about half a dimension of the case bottom wall 23 in the front-rear direction. The fan 50 is disposed such that a front end position thereof is located at substantially the same position as a front end of the rear battery module 30. In addition, the fan 50 is disposed in a manner to slightly protrude rearward from the rear end of the battery case 20 in the plan view. Furthermore, in the right-left direction, the fan 50 is disposed in a region on the left side of the right end of the rear battery module 30 and on the right side of the left end thereof. Accordingly, in the present embodiment, substantially the entire fan 50 overlaps the rear battery module 30 in the plan view.

The fan case 52 is formed with a discharge port 55 for discharging the cooling air. The fan 50 is supported by the case bottom wall 23 in such a posture that the discharge port 55 is located in a rear end portion of the fan case 52 and is opened obliquely rearward to the right.

A cylindrical cooling air lead-out duct 58 that extends from the discharge port 55 is connected to the fan case 52. The cooling air lead-out duct 58 is a cylindrical member, and one opening end thereof is connected to the discharge port 55. In the cooling air lead-out duct 58, an opening end on an opposite side from the opening end connected to the discharge port 55, that is, an opening end on the downstream side in the flow direction of the cooling air is opened to an internal space of the second luggage room R32. Accordingly, the cooling air in the fan case 52 is discharged from the discharge port 55 to the cooling air lead-out duct 58, and is then led out from the cooling air lead-out duct 58 into the second luggage room R32. In the present embodiment, the cooling air lead-out duct 58 has a shape that extends along an opening direction of the discharge port 55, and the opening end thereof on the downstream side is opened in substantially the same direction as the discharge port 55. That is, the cooling air lead-out duct 58 extends obliquely rearward to the right from the discharge port 55, and the opening end thereof on the downstream side is opened obliquely rearward to the right.

As illustrated in FIG. 8, the cooling air lead-out duct 58 extends rightward from the discharge port 55 along a rear surface of the battery case 20. In the present embodiment, the cooling air lead-out duct 58 is inclined obliquely rearward with respect to the rear surface of the battery case 20, and a separation distance between the cooling air lead-out duct 58 and the battery case 20 in the plan view is increased toward the downstream side in the flow direction of the cooling air.

In addition, as illustrated in FIG. 7 and the like, the opening end on the downstream side of the cooling air lead-out duct 58 is opened in a direction that is substantially parallel to the floor panel 10. In the present embodiment, the cooling air lead-out duct 58 has such a shape that a downstream side is located higher than an upstream side in the flow direction of the cooling air, and, at a position higher than the discharge port 55, the cooling air is led out from the cooling air lead-out duct 58 to the outside into the second luggage room R32.

As described above, the second luggage room R32 is a substantially closed space. Accordingly, the air in the second luggage room R32 is agitated by the cooling air that has been led out from the cooling air lead-out duct 58. In the present embodiment, as described above, the opening end on the downstream side of the cooling air lead-out duct 58 is opened in the direction that is substantially parallel to the floor panel 10. In addition, the above opening end is opened obliquely rearward to the right. Accordingly, as indicated by an arrow Y10 in FIG. 3, the cooling air is led out obliquely rearward to the right from the above opening end and swirls along an outer peripheral edge of the second luggage room R32, whereby the air in the second luggage room R32 is agitated.

As illustrated in FIG. 5, the fan 50 and the cooling air lead-out duct 58 that are configured as described above are accommodated in the recessed portion 11. More specifically, the fan 50 and the cooling air lead-out duct 58 are entirely disposed at a position that overlaps the recessed portion 11 in the plan view. In addition, in the up-down direction, the substantially entire fan 50 is arranged at a position that is lower than an upper end position of the recessed portion 11. Here, the battery 6 is arranged above the upper end position of the recessed portion 11.

### (Positional Relationship Between Battery Unit and Exhaust Pipe)

As illustrated in FIG. 4, the exhaust pipe 80 and the battery 6 overlap each other in the plan view. More specifically, the pre-silencer 82 is located in front of the battery 6, the main silencer 83 is located behind the battery 6 and does not overlap the battery 6 and each of the silencers 82, 83, in the plan view and the connection pipe 84 of the exhaust pipe 80 overlaps the battery 6 in the plan view.

The connection pipe 84 runs below the portion of the battery 6 in which the under duct 41 and the fan 50 are arranged, and the connection pipe 84 overlaps the under duct 41 and the fan 50 in the plan view. More specifically, in the right-left direction, the fan 50 is located on the left side of a right-left center of the under duct 41. The connection pipe 84 is bent leftward in the rear end portion of the under duct 41. The connection pipe 84 overlaps the vicinity of the right-left center of the under duct 41 and a right portion of the fan in the plan view. Here, a rear end portion of the connection pipe 84 is connected to a right-left central portion at a front end of the main silencer 83.

As illustrated in FIG. 5, the main silencer 83 is located higher than the pre-silencer 82, and the connection pipe 84 includes: a first pipe portion 84A that constitutes a front portion thereof and extends substantially straight to the rear from the pre-silencer 82 along the case bottom wall 23; and a second pipe portion 84B that constitutes a rear portion of the connection pipe 84 and is inclined obliquely upward to the rear from a rear end of the first pipe portion 84A, that is, an end portion on the downstream side in the flow direction of the cooling air. In the front-rear direction, a boundary position between the first pipe portion 84A and the second pipe portion 84B is set in the vicinity of a rear end position of the battery 6. Accordingly, a separation distance between a portion of the floor panel 10 opposing the battery 6 and the connection pipe 84, that is, the exhaust pipe 80 is longer than a separation distance between a portion of the floor panel 10 behind the battery 6 and the exhaust pipe 80. For example, while a separation distance L2 between the floor panel 10 and the main silencer 83 is set to about 50 mm, a separation distance L1 between the portion of the floor panel 10 opposing the battery 6 and the connection pipe 84 is set to about 200 mm.

### (Operational Effects, Etc.)

As described above, in the vehicle V according to the above embodiment, the fan 50 for drawing the cooling air into the battery case 20 is disposed between the floor panel 10, which is arranged above the exhaust pipe 80, and the battery 6 and thus the battery modules 30, 30. Accordingly, radiant heat that is released from the exhaust pipe toward the battery 6 can be blocked by the floor panel 10, the fan 50, and the cooling air that flows through the fan 50. Therefore, it is possible to prevent temperatures of the battery case 20 and thus the battery modules 30, 30, which are accommodated therein, from becoming high due to the radiant heat from the exhaust pipe 80. That is, it is possible to exert favorable cooling performance for the battery modules 30, 30 by the cooling air and to reliably cool the battery modules 30, 30.

In particular, in the above embodiment, the fan 50 is provided at the position that overlaps the rear battery module 30 in the plan view. Accordingly, it is possible to further reliably block the radiant heat, which is released from the exhaust pipe 80 toward the battery 6, by the fan 50 and the cooling air flowing through the fan 50. Thus, it is possible to further reliably exert the favorable cooling performance for the battery modules 30, 30 by the cooling air.

In the above embodiment, the fan 50 is provided at the position that overlaps the exhaust pipe 80 in the plan view. Accordingly, it is possible to further reliably reduce thermal energy that is applied to the battery module 30 from the exhaust pipe 80, and it is possible to further reliably exert the favorable cooling performance for the battery modules 30, 30 by the cooling air.

In the above embodiment, the fan 50 is supported by the case bottom wall 23 while protruding downward therefrom. Accordingly, it is possible to suppress the temperature increases of the case bottom wall 23, thus the battery case 20, and the battery modules 30, 30, which are accommodated therein, caused by the radiant heat from the exhaust pipe. Therefore, it is possible to further reliably exert the favorable cooling performance for the battery modules 30 by the cooling air.

In the above embodiment, the fan 50 is accommodated in the recessed portion 11. Accordingly, it is possible to arrange the fan 50 at the position that protrudes downward from the case bottom wall 23 and can block the radiant heat without increasing height positions of the battery case 20 and the battery 6.

In the above embodiment, the fan case 52 is made of the resin. Accordingly, it is possible to suppress the temperature increase of the fan case 52 and to suppress the temperature increases of the battery 6 and the battery module 30 by reducing an amount of heat transferred from the fan case 52 to the battery 6.

In the above embodiment, the cooling air lead-out duct 58, which is connected to the discharge port 55 of the fan 50, is inclined obliquely rearward with respect to the rear surface of the battery case 20, and the separation distance between the cooling air lead-out duct 58 and the battery case 20 in the plan view is increased toward the downstream side in the flow direction of the cooling air. Accordingly, as indicated by the arrow Y10 in FIG. 3, the cooling air can be led out obliquely rearward to the right and in a direction away from the battery case 20 in the front-rear direction from the cooling air lead-out duct 58. Therefore, it is possible to prevent the temperature increase of the battery case 20 and thus the battery 6 caused by application of the relatively high-temperature cooling air that has cooled the battery 6.

In the above embodiment, the opening end on the downstream side of the cooling air lead-out duct 58 is opened in the direction that is substantially parallel to the floor panel 10. Accordingly, the cooling air can be moved along the floor panel 10, and the floor panel 10 can be cooled by the cooling air. Therefore, it is possible to suppress the temperature increase of the battery 6 due to the heat reception from the floor panel 10.

In the above embodiment, the opening end on the downstream side of the cooling air lead-out duct 58 is opened to the second luggage room R32 that is the substantially closed space. Accordingly, the air in the second luggage room R32 can be agitated by the cooling air that is led out from the cooling air lead-out duct 58, whereby the temperature increase of the floor panel 10 can be suppressed. Therefore, it is possible to suppress the temperature increase of the battery 6 due to the heat reception from the floor panel 10. In the present embodiment, the tray 7 is disposed behind the battery 6 in the second luggage room R32. However, as described above, the gap 7X is defined between the tray 7 and the floor panel 10, and the air partially flows through this gap 7X.

Here, in the case where the opening end on the downstream side of the cooling air lead-out duct 58 is opened to the second luggage room R32 as described above, a liquid that is accumulated at a bottom of the second luggage room R32 due to spilling by the user, or the like possibly enters the cooling air lead-out duct 58 and thus the fan 50. Meanwhile, in the above embodiment, the cooling air lead-out duct 58 has such a shape that the downstream side thereof is located higher than the upstream side, and the separation distance between the opening end on the downstream side and the floor panel 10 is set to be relatively long. Therefore, it is possible to prevent the liquid, which is accumulated at the bottom of the second luggage room R32, from entering the cooling air lead-out duct 58 and the fan 50.

In the above embodiment, the battery 6 is disposed at the position that does not overlap the main silencer 83 and the pre-silencer 82 in the plan view. Therefore, it is possible to reduce a heat reception amount from the main silencer 83 to the battery and to further reliably lower the temperature of the battery 6.

The connection pipe 84, which overlaps the battery 6 in the plan view, is configured by: the first pipe portion 84A that extends along the case bottom wall 23; and the second pipe portion 84B that is inclined obliquely upward from the rear end of the first pipe portion 84A toward the main silencer 83. Therefore, it is possible to suppress the amount of heat transferred from the exhaust pipe 80 to the battery 6 to be small by arranging the main silencer 83 at the relatively upper position while increasing the separation distance between the case bottom wall 23 and the exhaust pipe 80 (the first pipe portion 84A).

In the above embodiment, the battery 6 is disposed at the position that does not overlap the catalytic device 81 in the plan view. Therefore, it is also possible to suppress the amount of heat transferred from the catalytic device 81 to the battery 6 to be small.

In the above embodiment, the description has been made on the case where the fan 50 is supported by the case bottom wall 23 while protruding downward therefrom. However, the fan 50 only needs to be arranged at the position between the battery module 30 and the floor panel 10 and, for example, may be arranged at the above position while being accommodated inside the battery case 20.

In the above embodiment, the description has been made on the case where the fan 50 is the sirocco fan. However, the fan type is not limited thereto.

In the above embodiment, the description has been made on the case where the cooling air lead-out duct 58 is connected to the discharge port 55 of the fan 50. However, the cooling air lead-out duct 58 can be omitted.

In the above embodiment, the description has been made on the case where the battery 6 has the two battery modules 30, 30. However, the number of the battery modules 30 is not limited thereto. In addition, the specific shapes and the arrangement of the battery 6 and the cooling duct 40 are not limited to the above.

In the above embodiment, the description has been made on the case where the tray 7 is arranged behind the battery unit 100 in the second luggage room R32. However, the tray 7 can be omitted. The vehicle V is not limited to that having the two rows of the seats. The vehicle V only needs to be the vehicle on which the engine E is mounted, and may be an engine vehicle instead of the hybrid vehicle.

### Reference Signs List:

5: luggage board
6: battery
10: floor panel
11: recessed portion
20: battery case
23: battery bottom wall (bottom portion of battery case)
24: communication hole
30: battery module (battery body)
31: battery cell
40: cooling duct
41: under duct
41A: under duct bottom wall
50: fan
51: fan body
52: fan case
55: discharge port
58: cooling air lead-out duct
80: exhaust pipe
81: catalytic device
82: pre-silencer
83: silencer
84A: first pipe portion (first pipe portion)
84B: second pipe portion (second pipe portion)
E: engine
R3: second luggage room (accommodation portion)

## Claims

1. A battery cooling structure applied to a vehicle (V) on which an engine (E) is mounted, the battery cooling structure comprising:
a floor panel (10) that constitutes a floor surface of the vehicle (V);
an exhaust pipe (80) that is disposed below the floor panel (10) and guides exhaust gas discharged from the engine (E) to outside of the vehicle (V);
a battery (6) that has: a battery body (30) disposed above the floor panel (10) and including a battery cell (31); and a battery case (20) accommodating the battery body (30) therein; and
a fan (50) that is disposed above the floor panel (10) to draw cooling air for cooling the battery body (30) into the battery case (20), wherein the fan (50) is disposed between the battery body (30) and the floor panel (10).

2. The battery cooling structure according to claim 1, wherein the fan (50) is provided at a position that overlaps the battery body (30) in a plan view.

3. The battery cooling structure according to claim 1, wherein the fan (50) is provided at a position that overlaps the exhaust pipe (80) in a plan view.

4. The battery cooling structure according to claim 1, wherein the fan (50) is supported on a bottom portion (23) of the battery case (20) while protruding downward from the bottom portion (23).

5. The battery cooling structure according to claim 4, wherein a portion of the floor panel (10) that opposes the fan (50) has a downwardly recessed shape (11).

6. The battery cooling structure according to claim 4, wherein the fan (50) has: a fan body (51) that includes plural blades (51A); and a fan case (52) that accommodates the fan body (51) therein, and the fan case (52) is made of resin.

7. The battery cooling structure according to claim 1, wherein the fan (50) has a discharge port (55) for discharging the cooling air that has cooled the battery body (30) to outside of the battery case (20), and includes a cooling air lead-out duct (58) into which the cooling air discharged from the discharge port (55) is introduced, and a separation distance between the cooling air lead-out duct (58) and the battery case (20) in a plan view is longer toward a downstream side in a flow direction of the cooling air.

8. The battery cooling structure according to claim 1, wherein the fan (50) has a discharge port (55) for discharging the cooling air that has cooled the battery body (30) to outside of the battery case (20), and includes a cooling air lead-out duct (58) into which the cooling air discharged from the discharge port (55) is introduced, and in a flow direction of the cooling air, an end portion on a downstream side of the cooling air lead-out duct (58) is opened in a direction along the floor panel (10).

9. The battery cooling structure according to claim 1, wherein the fan (50) has a discharge port (55) for discharging the cooling air that has cooled the battery body (30) to outside of the battery case (20), and includes a cooling air lead-out duct (58) into which the cooling air discharged from the discharge port (55) is introduced, the battery (6), the fan (50), and the cooling air lead-out duct (58) are accommodated in an accommodation portion (R32) that is defined by the floor panel (10) and a luggage board (5) disposed above the floor panel (10), and an end portion on a downstream side of the cooling air lead-out duct (58) is opened to inside of the accommodation portion (R32).

10. The battery cooling structure according to claim 9, wherein the cooling air lead-out duct (58) has such a shape that a downstream side is located higher than an upstream side in a flow direction of the cooling air.

11. The battery cooling structure according to claim 1 comprising:
a silencer (82, 83) that is provided to the exhaust pipe (80), wherein
the battery (6) is disposed at a position that does not overlap the silencer (82, 83) in a plan view.

12. The battery cooling structure according to claim **11,** wherein the exhaust pipe (80) includes: a first pipe portion (84A) that extends along a bottom portion (23) of the battery case (20); and a second pipe portion (84B) that connects an end portion on a downstream side of the first pipe portion (84A) and the silencer (83), the silencer (83) is located above the first pipe portion (84A), and the second pipe portion (84B) has a shape that is inclined obliquely upward from the end portion on the downstream side of the first pipe portion (84A) toward the silencer (83).

13. The battery cooling structure according to any one of claims 1 to 12 comprising:
a catalytic device (81) that is provided to the exhaust pipe (80), wherein
the battery (6) is disposed at a position that does not overlap the catalytic device (81) in the plan view.
